# EUROPEAN PATENT SPECIFICATION

(11) **EP 3 817 540 B1**
(45) Date of publication and mention of the grant of the patent: **04.11.2026**
(21) Application number: 19746175.9
(22) Date of filing: 01.07.2019
(51) Int. Cl.: A01D 34/00, A01D 75/18

(54) **DEVICE FOR CONTROLLING THE OPERATION OF AN AGRICULTURAL EQUIPMENT**
VORRICHTUNG ZUR STEUERUNG DES BETRIEBS EINES LANDWIRTSCHAFTLICHEN GERÄTES
DISPOSITIF DE COMMANDE DE FONCTIONNEMENT D'UN ÉQUIPEMENT AGRICOLE

(30) Priority: 05.07.2018 IT 201800006937
(43) Date of publication of application: 12.05.2021
(73) Proprietor: Nobili S.p.A., 40062 Molinella (Bologna) (IT)
(72) Inventor: ROSSI, Mario, 40062 Molinella (BO) (IT)
(74) Representative: Fanzini, Valeriano
(86) International application number: PCT/IB2019/055600
(87) International publication number: WO 2020/008338

(56) References cited:
- EP-A1- 2 878 186
- WO-A1-2013/100925
- GB-A- 2 477 543
- US-A1- 2009 237 227
- US-A1- 2010 191 408

## Description

### Field of application of the present invention

The present invention relates to an agricultural equipment.

### Prior art

Farming equipment, or mulchers, are known, for cutting plant material, such as grass, shrubs and the like, which equipment are towable and/or carried by a corresponding transport or towing means, in particular in the form of a corresponding agricultural tractor and comprise a respective rotating rotor that supports respective members, or knives, for engaging and cutting the plant material, and respective protection means, especially in the form of a respective bonnet, defining an operative chamber for the same cutting means.

Said known mulchers comprise, moreover, means for actuating the rotor, in particular including respective multiplying means, or gearbox, which preferably receive the actuation from the tractor through a respective power take-off, and which generally are supported on said protection means, or bonnet, above them.

A perceived problem for the above equipment or mulchers for cutting plant material concerns the breakages the latter undergo, without the possibility for the user or utiliser to foresee them in any way and to perform corresponding maintenance actions in useful time, with consequent excessive damages and economic losses deriving from the need to interrupt ongoing work activities.

In the sector, the need is also felt to known, to some extent, the causes that led to the harmful situation for the good material condition of the equipment. In this way, it is imagined that maintenance and/or repair operators would be able to take more targeted and effective activities.

Moreover, in the sector there is a further need to know the operating status of said equipment, but without carrying out, on the same equipment, work that is excessively complex, and that is ultimately too laborious and expensive.

US2009/0237227 discloses a system and method for detecting impending failure of a component of a disc cutterhead of a cutterbar of a plant cutting machine, in which the components will generate at least one indicator of an impending failure thereof, utilizing a plurality of sensors distributed among the cutterheads.

WO2013/100925 discloses a riding yard maintenance vehicle which include a positioning module configured to store position information indicative of a position history of the vehicle responsive to operation of the vehicle defining a route.

GB2477543 discloses a grass cutting machine having an inclinometer adapted to measure the inclination of the chassis and a controller adapted to receive an inclination value from the inclinometer.

### Summary of the invention

However, the present invention aims to propose a new solution and/or an alternative to the solutions known to date and in particular it aims to overcome one or more of the drawbacks or problems referred to above, and/or to meet one or more requirements felt in the art, and in particular that can be deduced from the above.

A device for controlling the operation of an agricultural equipment accorgding to claim 1 is therefore provided

In this way, it is possible to easily check the equipment and thus to limit the risks of breakages of the equipment.

### Brief description of the drawings

This and other innovative aspects are, nonetheless, set forth in the claims, whose technical features, together with corresponding advantages achieved, are readily apparent in the following detailed description, illustrating a preferred and advantageous embodiment of the invention, which is provided with reference to the accompanying drawings, in which:
- figure 1 shows a schematic perspective view of a preferred embodiment of a device according to the present invention, mounted on a corresponding cutting equipment or mulcher;
- figure 2 shows a schematic perspective view of an enlarged detail of figure 1;
- figure 3 shows a block diagram illustrating the main activities carried out by the present preferred embodiment of a device according to the present invention;
- figure 4 shows a view of a screen, which can be displayed on a corresponding display, that is implemented by the preferred embodiment of device according to the present invention;
- figure 5 shows a view of another screen implemented by the preferred embodiment of device according to the present invention.
- figure 6 shows the equipment using the control device according to the present invention in an inclined working condition.

### Detailed description of preferred embodiments of the invention

The accompanying figures show a preferred embodiment of an agricultural equipment 11 for cutting plant material.

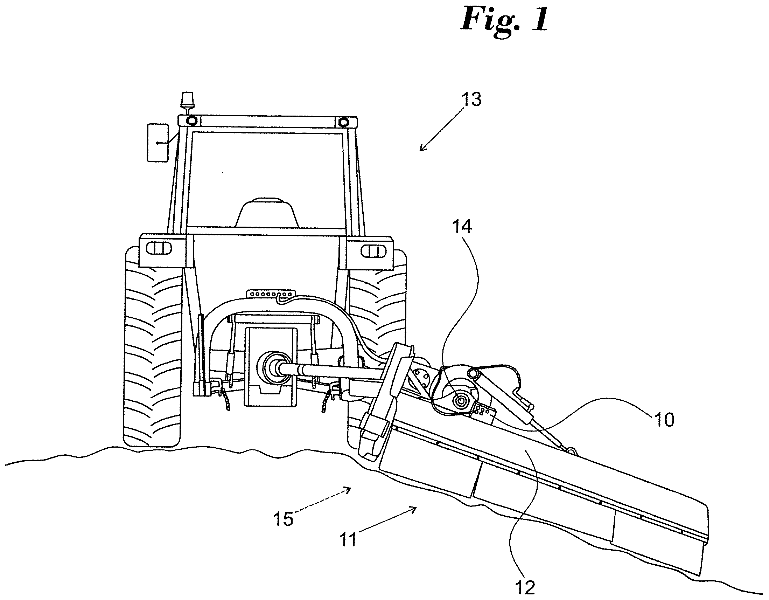

As it is shown in figure 1, a device 10 for controlling the operation of the corresponding equipment 11 is usable in the equipment for cutting plant material, such as grass, shrubs and the like, and especially in the form of a mulcher; the equipment or mulcher is preferably towable and/or carried by a corresponding transport or trailing means, such as an agricultural tractor 13.

Said equipment 11 comprises means 15 for cutting the plant material, not particularly illustrated in the accompanying figures and in any case, in a known manner, including a rotor supporting respective organs, or knives, for engaging and cutting the plant material, and respective protection means 12, especially in the form of a respective bonnet, defining an operative chamber for the same cutting means.

In practice, said cutting means 15, whose axis of the rotor extends transversely to the direction of advance of the equipment supported rotatably by the frame of equipment itself, are situated between the protection bonnet 12 and the ground, inside said operative chamber defined between them.

The equipment 11 further comprises actuating means, in particular for actuating the cutting means, in particular including respective multiplying means, or gearbox, 14, which preferably receive the actuation through a respective power take-off 16, and which in particular are supported on said protection means, or bonnet 12, or above them.

Means are provided for detecting one or more parameters, or measurable physical magnitudes, of the equipment, or of a part thereof, in particular of the equipment under a working or operative condition, in particular a cutting condition, and processing means are also provided, in particular of the processor type, which are configured so as to implement a corresponding activity starting from the respective signal received by said detection means.

In this way, it is possible to know the working or operative condition in which equipment of this kind is, and hence to avoid those behaviors that can lead to excessive damages for the same equipment.

The processing means, in particular of the processor kind, can be embodied in any way desired and in general they can comprise a CPU, of the respective input/output circuits and a corresponding memory.

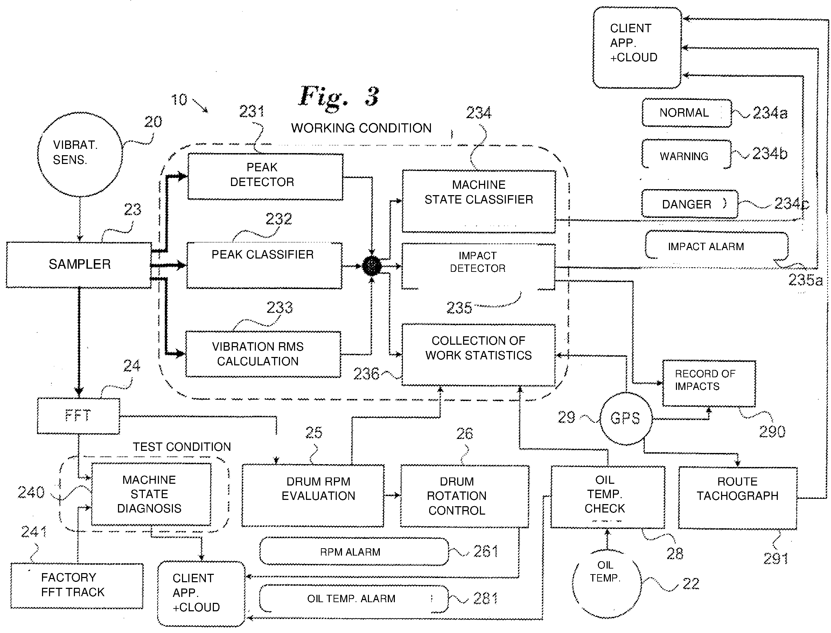

Advantageously, as is readily apparent from figure 3, which shows an operating diagram of the present device 10, the present detection means comprise means 20 that are suitable to detect at least one parameter, or magnitude, representing the vibration state of the equipment, which is caused in particular by the rotating movement of said cutting means.

Said means (20) that are suitable to detect a parameter or magnitude representing the vibration state of the equipment comprise one or more, preferably a plurality of acceleration sensors, however they are not particularly illustrated in the accompanying figures.

As is readily apparent from the figures, said detection means also comprise means 22 that are suitable to detect a corresponding temperature, in particular the temperature of the lubricating oil that is present at the actuating means, i.e., within said multiplying means or gearbox 14.

Advantageously, as is readily apparent from said figure 3, said processing means are configured to implement a sampling activity 23 of the parameter representing the vibration state of the equipment that was detected by the respective detection means.

Advantageously, as is readily apparent from said figure 3, said processing means are then configured to implement, in particular starting from said sampling of the parameter representing the vibration state of the equipment, an activity 231 for determining the presence of a respective vibration peak of the equipment.

As is readily apparent from figure 3, advantageously said processing means are configured to implement, in particular starting from said sampling of the parameter representing the vibration state of the equipment, a respective activity 231 for calculating a mean value, of long-term sampling, of the detected signal of said parameter that is representative of the vibration state of the equipment.

Additionally, advantageously, as is readily apparent from said figure 3, said processing means are configured to implement, in particular starting from said determination 231 of the vibration peaks and/or from said categorization 232 of said vibration peaks and/or from said calculation 233 of the mean value of the signal of said parameter representing the vibration state of the equipment, a categorization activity 234 of the operative state of the equipment.

Advantageously, as is readily apparent from said figure 3, said processing means are configured to implement, in particular starting from said determination 231 of the vibration peaks and/or from said categorization 232 of said vibration peaks and/or from said calculation 233 of the mean value of the signal of said parameter representing the vibration state of the equipment, an activity 235 that allows to determine the occurrence of an impact of the equipment, i.e., the rotor or the knives thereof, in particular against a corresponding body, such as a trunk, a rock, or against an obstacle of any kind.

Advantageously, as is readily apparent from figure 3, said processing means are configured to implement an activity 25 for calculating the rotation speed of the cutting means or the respective rotor (or drum), for example measured in revolutions/minute, in particular starting from the respective detected parameter, in particular of the parameter representing the vibration state of the equipment.

Advantageously, as is readily apparent from figure 3, said processing means are configured to implement an activity 26 for controlling the rotation speed of the cutting means or the respective rotor, in particular starting from the speed calculated following the detection of the respective parameter representing the vibration state of the equipment.

Advantageously, said processing means are configured to implement an activity 28 for controlling the temperature, in particular the temperature of the lubricating oil that is present at the actuating means, i.e., within, said multiplying means or gearbox.

Advantageously, as is readily apparent from said figures and in particular from figure 3, said activity implemented by said processing means consists of an activity of the information type for a corresponding user.

Advantageously, as is readily apparent from figure 3, said processing means are configured to implement, following the categorization of the operational status of the equipment, an information activity for the user by defining a condition 234a of standard operation of the equipment and a condition 234c of hazard for the operation of the equipment, as well as a possible intermediate condition 234b of attention for the operation of the same equipment.

Advantageously, although it is not particularly illustrated in the accompanying figures, said activity of the information type for the user can provide for signaling to the user the need for performing an inspection or check of the equipment, in particular by a workshop, in particular authorized by the manufacturer of the equipment, for performing such activity.

Advantageously, although it is not particularly illustrated in the accompanying figures, said activity of the information type for the user can provide for signaling to the user the need for performing an inspection or check of the equipment, with the signaling activity that would be activated upon reaching a maximum and pre-set number of events of exceeding one or more corresponding threshold values of one or more parameters, or measurable physical magnitudes, of the equipment.

Advantageously, although it is not particularly illustrated in the accompanying figures, said activity of the information type for the user can also provide for signaling to the user the need for performing an ordinary maintenance of the equipment; which signaling activity is activated upon reaching a predetermined level for a respective working parameter, in particular defined by the number of working hours carried out by the same equipment.

In particular, although it is not particularly illustrated in the accompanying figures, said activity of the information type for the user is defined by the signaling to the user of the need for performing an extraordinary maintenance of the equipment; in particular, which signaling activity would be activated upon reaching a predetermined level for a respective parameter, especially defined by the general vibration level of the equipment.

In particular, as is readily apparent from figure 3, said activity of the information type for the user is defined by the emission of an alarm signal, in particular upon exceeding a respective threshold value of a respective parameter or magnitude.

Advantageously, as is readily apparent from figure 3, said processing means are configured to implement, in particular starting from the determination of the occurrence of an impact by the equipment, the emission of a corresponding impact alarm piece of information 235a.

Advantageously, as can be seen in said figure 3, in particular following said activity 26 for controlling the rotation speed of the cutting means or the respective rotor, especially starting from the speed calculated following the detection of the respective parameter representing the vibration state of the equipment, said processing means are configured to implement an alarm information activity 261 for reaching an excessive rotation speed of the cutting means or the respective rotor.

Advantageously, as is readily apparent from said figure 3, in particular following said activity 28 for controlling the temperature, especially the temperature of the lubricating oil that is present at the actuating means, i.e., within said multiplying means or gearbox, said processing means are configured to implement an alarm information activity 281 for reaching an excessive temperature, in particular for reaching an excessive temperature of the lubricating oil that is present at the actuating means, i.e., within said multiplying means or gearbox 14.

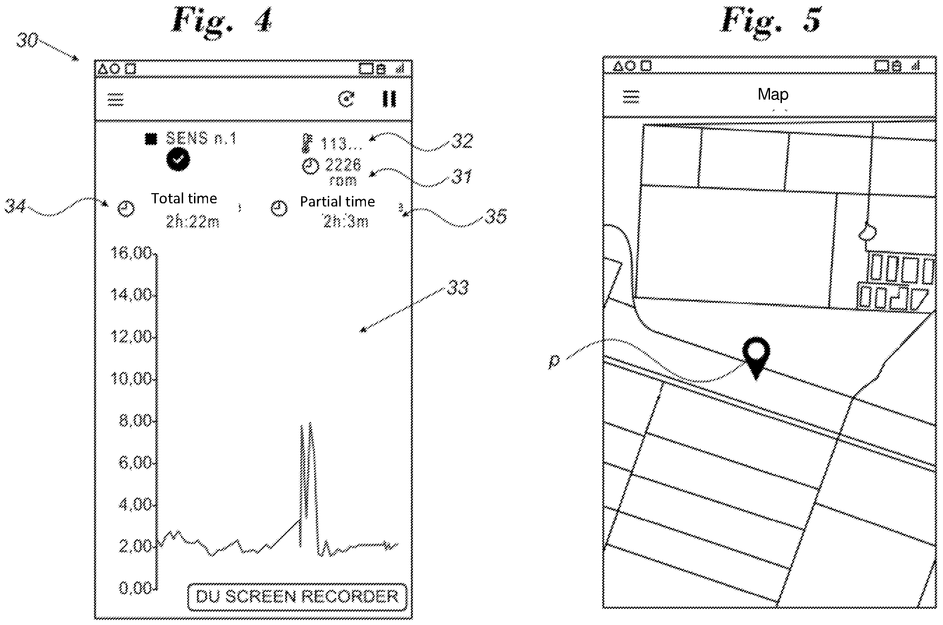

As is readily apparent from figure 4, said processing means are also configured to implement an activity of displaying, on a corresponding display, corresponding operative or working parameters or magnitudes of the equipment.

Advantageously, as is readily apparent from said figure 4, said processing means are also configured to implement a screen, or graphical interface 30, in which are displayed the values of one or more of the following parameters, or magnitudes:
- working rate of the equipment, in particular rotation rate of the rotor 31,
- temperature of the equipment, or of a part thereof, in particular temperature 32 of the lubricating oil inside said multiplying means or of the gearbox,
- general level of vibration of the equipment 33,
- total or overall working time of the equipment 34,
- partial time, or of the specific session, of work of the equipment 35.

In this way, the user or utiliser, in particular of the equipment, is able to immediately know the operating situation of the agricultural equipment.

Preferably, as is readily apparent from said figure 4, said processing means are configured to display a graph, or line, illustrating the trend of a specific parameter, or a specific magnitude, in particular the trend of the parameter or magnitude representative of the general vibration level of the equipment; said trend of the value of the parameter being especially represented as a function of time.

Advantageously, as is readily apparent from figure 5, said processing means are configured to display a map in which the territorial location P of the equipment is indicated, in particular, the territorial location of the equipment upon reaching a respective threshold value of a corresponding parameter or magnitude.

Advantageously, as is readily apparent from figure 4, said activity of emitting an alarm signal, in particular upon exceeding a respective threshold value of a respective parameter or magnitude, consists in displaying in a different manner, for example in a red color, in the respective screen view, the respective parameter, or magnitude.

Advantageously, as is readily apparent from figure 3, said processing means are configured to implement an activity (236) of storing working data of the equipment, in particular in a corresponding memory of the device, especially in a memory of the permanent and rewritable type.

Advantageously, said storing activity implemented by said processing means provides for storing the trend, in particular the temporal trend, of a corresponding parameter or magnitude.

Advantageously, said storing activity implemented by said processing means provides for storing the duration of the exceeding time of the threshold value of the respective parameter or magnitude, in particular the duration of the exceeding time of the threshold value of the same parameter or magnitude.

Moreover, advantageously, said storing activity implemented by said processing means provides for storing the working data of the equipment for a predetermined period, for example for a period of eight hours.

Advantageously, said storing activity also provides for storing the total number of working hours of the equipment, i.e., the total number of hours during which the equipment is operating.

**In** a particularly advantageous manner, said processing means are configured to allow the respective user setting the threshold or limit values of the considered parameters or magnitudes, in particular the respective threshold value being selected which corresponds to or is representative of a respective model or type of mulcher.

Advantageously, as is readily apparent from figure 5, the same device thus comprises means for localizing the position of the device, i.e., the equipment which it is applied to, in particular in the form of a GPS location tracker 29.

Said processing means are also configured to store, in particular upon exceeding a predetermined threshold of a respective parameter or magnitude, date, hour, and duration of threshold exceeding, and possibly the geographical position of the device or equipment during the event of exceeding said predetermined threshold.

Advantageously, the same device comprises communication means, in particular in a wireless mode, preferably with a Bluetooth technology, with a corresponding electronic digital device, for example a mobile phone or a smartphone, i.e., a computer, in particular a palmtop, of the respective user, and in particular with ad electronic digital device having a respective displaying screen.

**In** particular, the communication, in particular in a wireless mode, preferably with a Bluetooth technology, with said corresponding electronic digital device occurs during the acquisition step by the same processing means, in particular of the processor type, in particular so as to use as a display of the operation of the equipment the display of the user's electronic digital device, for example consisting of a smartphone or a tablet or other.

In this way, it is not necessary to provide dedicated display devices aboard the tractor.

Advantageously, said processing means are configured to implement an activity of request for an authorization password, or corresponding code, for the user, who interfaces with the device, in particular to carry out the download or transfer of the working data of the equipment.

Other systems to verify the security of access to the data processed by the present device can nevertheless be imagined.

Advantageously, as is readily apparent from said figure 3, said processing means are configured to convert the detected signal, in particular the detected vibration signal, in particular through corresponding converting means, or a corresponding algorithm, 24, in particular of the Fast Fourier Transform type; in particular said transformed vibration signal being advantageously used to calculate the rotation rate of said rotor in 25.

Advantageously, as is readily apparent from figure 3, said processing means are also configured to compare in 240 the detected signal, in particular the signal detected and converted, with a corresponding signal 241, in particular stored in the memory of the device 10, and corresponding to the equipment 11 under optimum conditions, in particular corresponding to the condition of the equipment 11 exiting the manufacturing facility thereof, and then to carry out a corresponding diagnosis of the condition, in which the same equipment is at that moment.

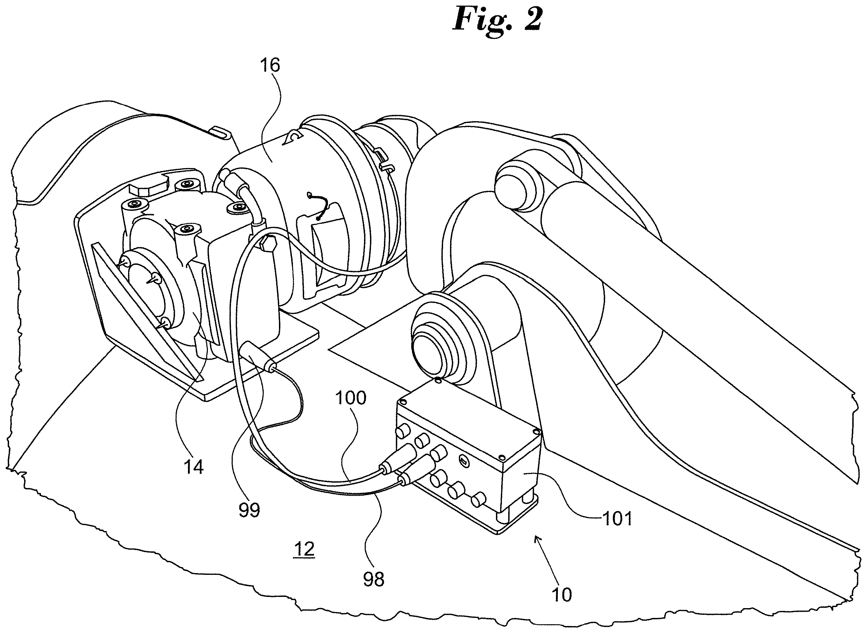

In particular, as is readily apparent from figures 1 and 2, the same device 10 comprises respective support means, in particular in the form of a respective box-shaped body 101.

Advantageously, as is readily apparent from figures 1 and 2, the respective sensor of the vibration detection means of the equipment is

As is readily apparent from figures 1 and 2, the same device 10 can be associated to an equipment, in particular to the cover means, or bonnet, 12 thereof, preferably being positioned thereabove.

As is readily apparent from figures 1 and 2, the same device 10 can be positioned, or is positioned, in use, near to, preferably beside, the multiplying means or gearbox 14 of the equipment 11.

Especially, as is readily apparent from said figures 1 and 2, the device 10 comprise detection means 99, in particular for the detection of the temperature, which extend, in particular through a corresponding extension cable 98, from the same device 10, i.e., from the support means, or box-shaped body 101, of the same device 10.

Advantageously, as is readily apparent from figures 1 and 2, the device 10 comprises detection means 99, in particular for the detection of the temperature, having respective attachment means to the equipment at the area to be detected, of with the respective sensor that is secured to the gearbox 14 and extends inside it through a corresponding hole drilled in the box.

Advantageously, as is readily apparent from figures 1 and 2, means are provided for securing the device 10 to the equipment 11.

Appropriately, said means for securing the device 10 to the equipment 11 are in the form of magnetic means, of the permanent type, i.e., of a type that can be activated and deactivated.

In this way, it is not necessary to damage in any way the equipment in which the device 10 is applied.

As is readily apparent from said figures 1 and 2, electric power supply means 100 are provided for the device 10, in particular said electric power supply means comprising a respective electric cable 100 connecting to corresponding means for generating electric power of the transport vehicle or tractor.

According to a different embodiment, not shown in the accompanying figures, the electric power supply means of the device 10 could also be defined by an electric generator that draws energy from corresponding mechanical members of the equipment, in particular from rotatable members of the equipment, in particular multiplying means, or gearbox, or devices could be used which are suitable for converting the vibrations, or members of the equipment, in particular multiplying means, or gearbox, or devices could be used which are suitable for converting the vibrations, or corresponding electromagnetic fields, into electrical energy, or use corresponding photovoltaic means.

As is readily apparent from figure 3, said processing means are configured to implement an activity 236, 290 for the statistical collection of the working data of the equipment.

Advantageously, as is readily apparent from figure 3, said activity 236 for the statistical collection of the working data of the equipment regards data relating to said determination 231 of the vibration peaks and/or to said categorization 232 of said vibration peaks and/or said calculation 233 of the mean value, of long-term sampling, of the signal of said parameter, or magnitude, representing the vibration state of the equipment and/or the detected temperature value and/or the speed value of the rotor and/or the position signal of the equipment.

Advantageously, as is readily apparent from said figure 3, said activity 290 for the statistical collection of the working data of the equipment regards a historical collection of the impacts that the equipment has been subjected to, which is implemented starting from the signal coming from the location tracker 29 and from the impact detector 235.

With a further advantage, as can be seen from the corresponding dashed connection line in said figure 3, said historical collection activity 290 relates, in addition to said historical collection of the impacts that the equipment has undergone, the historical collection of the working data of the equipment, stored at 236, thus including, in addition to the historical collection of the impacts, also the historical collection of the vibration status of the equipment, of the rotation speed of the cutting means, or of the respective rotor, of the temperature, in particular the temperature of an oil, especially of the lubricating oil which is present at the drive means, and which is implemented starting from the data stored during the statistical collection activity 236 of the working data of the equipment. Said historical collection, generated at 290 is made available to the user, as can be seen from the corresponding dashed connection line in said figure 3.

With a further advantage, as can be seen from the corresponding dashed connection line in said figure 3, said temperature detection by said means 22 which are adapted to detect a corresponding temperature is made available to the user.

Likewise advantageously, as can be seen from the corresponding dashed connection line in said figure 3, said calculation of the speed of rotation of the cutting means or of the respective rotor, made at 25, is made available to the user.

As is readily apparent from said figure 3, said location tracker 29 also being used to implement an activity of measuring the speed of the path in 291.

In figure 3, reference numeral 17 indicates the application program implemented on the user's digital electronic device, and/or the corresponding cloud resource, to which the corresponding data to be made accessible to the user are sent.

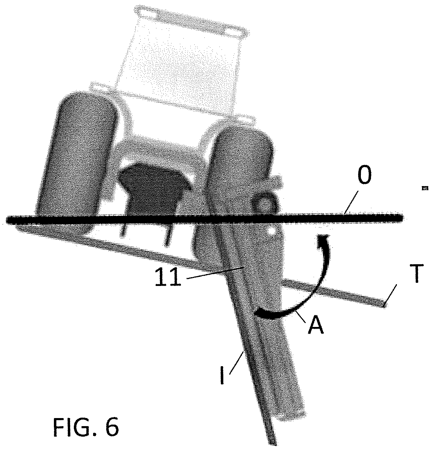

Advantageously, as shown in figure 6, the device implements, or comprises, means for determining the inclination A of the equipment, in particular with respect to the horizontal.

Advantageously, as can be seen in figure 6, said means for determining the inclination A of the equipment comprise respective means 20 for detecting the angular position of the equipment.

With particular advantage, said means for detecting the angular position of the equipment comprise, or consist of, one or more acceleration sensors 20, in particular defined as one or more acceleration sensors 20 which are adapted to detect at least one parameter, or magnitude, which is representative of the vibration state of the equipment.

Advantageously, as can be seen in figure 6, said means for determining the inclination of the equipment comprise processing means, in particular of the processor type, which are configured so that, starting from the signal received by said means 20 for detecting the angular position of the equipment 11, they determine said inclination of the equipment 11 with respect to the horizontal direction, or with respect to a predetermined reference axis 0, in particular corresponding, or substantially corresponding, with the horizontal direction.

In this way, the inclination detection is independent of the slope of the T on which the machine or tractor towing the equipment moves
In particular, as can be seen in figure 6, said means for determining the inclination of the equipment are adapted to determine the angular distance A of the transverse axis I of the equipment with respect to a predetermined reference axis 0, in particular defined by an axis 0 corresponding, or substantially corresponding, to the horizontal direction, in particular said determined angular distance being within an angular range of + 90°, upwards, and of -90°, downwards, with respect to said predetermined reference axis 0.

Advantageously, said predetermined reference axis 0 is conventionally predefined, or calibrated, during the preparation of the device 10 on the equipment 11, in particular so that it is corresponding or at least substantially corresponding, with the horizontal direction.

Advantageously, said processing means, in particular of the processor type, are configured to store the respective data determined with respect to the inclination of the equipment 11 and/or are configured to process or combine said given data relative to the inclination of the equipment with one or more other data relating to one or more other working conditions of the equipment 11.

Advantageously, said processing means, in particular of the processor type, which are configured to display, in particular in numerical form or in graphic form, the data determined with respect to the inclination of the equipment at a display, in particular at the display of the digital electronic device of the user of the equipment, for example consisting of a smartphone or a tablet or other.

In practice, as is apparent, the aforementioned technical features allow, individually or in a respective combination, to achieve one or more of the following advantageous results:
- avoid breakage of the equipment, with the user or utiliser who can therefore foresee them and activate corresponding maintenance activities in time;
- known, to some extent, the causes that led to the harmful situation for the good material condition of the equipment;
- take, by maintenance and/or repair operators, more targeted and effective activities;
- know the working status of said equipment, without having to perform complex and laborious interventions on the same equipment.

The present invention is susceptible of evident industrial application. The man skilled in the art will also be able to devise numerous modifications and/or variants to be made to the same invention, while remaining within the scope of the inventive concept, as defined by the appended claims.

## Claims

1. An agricultural equipment (11) for cutting plant material, such as grass, shrubs and the like, especially in the form of a mulcher, and preferably towable and/or carried by a corresponding transport or trailing means, such as an agricultural tractor (13); the equipment (11) comprising means (15) for cutting the plant material, including a rotor supporting respective organs, or knives, for engaging and cutting the plant material, and respective protection means (12), especially in the form of a respective bonnet, defining an operative chamber for the same cutting means; the equipment (11) further comprising actuating means of said cutting means including respective multiplying means or gearbox (14), and in particular being supported on said protection means, or bonnet, (12); the equipment further comprising a device (10) for controlling the operation of the agricultural equipment (11) which comprises detection means of one or more parameters, or measurable physical magnitudes, of the equipment, in particular of the equipment under a working or operative condition, and processing means, in particular of the processor type, which are configured so as to implement a corresponding activity starting from the respective signal received by said detection means; **characterized in that** said detection means comprise means (22) that are suitable to detect a corresponding temperature of the lubricating oil that is present within said multiplying means or gearbox.

2. The equipment according to claim 1, **characterized in that** said detection means comprise means (20) that are suitable to detect at least one parameter, or magnitude, representing the vibration state of the equipment, which is caused in particular by the rotating movement of said cutting means; in particular **in that** said means (20) that are suitable to detect a parameter or magnitude representing the vibration state of the equipment comprise one or more, preferably a plurality of acceleration sensors.

3. The equipment according to any of the preceding claims, **characterized in that** said processing means are configured to implement a sampling activity (23) of the detected parameter, in particular of the parameter representing the vibration state of the equipment.

4. The equipment according to claim 3, **characterized in that** said processing means are configured to implement, in particular starting from said sampling of the parameter representing the vibration state of the equipment, an activity (231) for determining the presence of a respective vibration peak of the equipment, and in particular **in that** said processing means are configured to implement, in particular starting from said sampling of the parameter representing the vibration state of the equipment, an activity (231) for categorizing the vibration peaks of the equipment.

5. The equipment according to claim 4, **characterized in that** said processing means are configured to implement, in particular starting from said determination (231) of the vibration peaks and/or from said categorization (232) of said vibration peaks and/or from said calculation (233) of the mean value of the signal of said parameter representing the vibration state of the equipment, an activity (235) for determining the occurrence of an impact of the equipment, i.e., the rotor or the knives thereof, in particular against a corresponding body, i.e., against an obstacle.

6. The equipment according to claim 2, **characterized in that** said processing means are configured to implement an activity (25) for calculating the rotation speed of the cutting means or the respective rotor, in particular starting from the respective detected parameter representing the vibration state of the equipment; and in particular **in that** said processing means are configured to implement an activity (26) for controlling the rotation speed of the cutting means or the respective rotor, in particular starting from the speed calculated following the detection of the respective parameter representing the vibration state of the equipment.

7. The equipment according to any one of the preceding claims 3-6, **characterized in that** said activity implemented by said processing means consists of an information type activity for a corresponding user, and in particular **in that** said processing means are configured to implement, following the categorization of the operational status of the equipment, an information activity for the user by defining a condition (234a) of standard operation of the equipment and a condition (234c) of hazard for the operation of the equipment, and a possible intermediate condition (234b) of attention for the operation of the same equipment.

8. The equipment according to any of the preceding claims, **characterized in that** the same device (10) comprises means for localizing the position of the device, i.e., the equipment which it is applied to, in particular in the form of a GPS location tracker (29).

9. The equipment according to any of the preceding claims, **characterized in that** said processing means are configured to store, in particular upon exceeding a predetermined threshold of a respective parameter or magnitude, date, hour, and duration of threshold exceeding, and possibly (in 290) the geographical position of the device or equipment during the event of exceeding said predetermined threshold.

10. The equipment according to any of the preceding claims, **characterized in that** the same device (10) comprises communication means, in particular in a wireless mode, preferably with a Bluetooth technology, with a corresponding electronic digital device, for example a mobile phone or a smartphone, i.e., a computer, in particular a palmtop, of the respective user, and in particular with ad electronic digital device having a respective displaying screen, and in particular **in that** the communication, in particular in a wireless mode, preferably with a Bluetooth technology, with a corresponding electronic digital device occurs during the acquisition step by the same processing means, in particular of the processor type, in particular so as to use as a display the display of said electronic digital device.

11. The equipment according to any of the preceding claims, **characterized in that** the same device (10) can be associated to an equipment, in particular to the cover means, or bonnet, (12) thereof, preferably being positioned thereabove.

12. The equipment according to any of the preceding claims, **characterized in that** the same device (10) can be positioned, or is positioned, in use, near to, preferably beside, the multiplying means or gearbox (14) of the equipment (11).

13. The equipment according to any of the preceding claims, **characterized in that** means for securing the device (10) to the equipment (11) are provided for, in particular in the form of magnetic means, of the permanent type, i.e., of a type that can be actuated and deactuated.

14. The equipment according to any of the preceding claims, **characterized in that** the device (10) implements, or comprises, means for determining the inclination (A) of the equipment, in particular with respect to the horizontal, and **in that** said means for determining the inclination (A) of the equipment comprise respective means (20) for detecting the angular position of the equipment, and **in that** said means for detecting the angular position of the equipment comprise, or consist of, one or more acceleration sensors (20), in particular defined as one or more acceleration sensors (20) which are adapted to detect at least one parameter, or magnitude, which is representative of the vibration state of the equipment.

## Patentansprüche

1. Landwirtschaftliche Vorrichtung (11) zum Schneiden von Pflanzenmaterialien wie Gras, Sträuchern usw., insbesondere in Form eines Häckslers, vorzugsweise ziehfähig und/oder transportierbar durch ein geeignetes Transport-oder Ziehmittel, wie z. B. einen landwirtschaftlichen Traktor (13); wobei die Vorrichtung (11) umfasst Mittel (15) zum Schneiden von Pflanzenmaterialien, einschließlich eines Rotors, der die jeweiligen Komponenten oder Messer zum Ankoppeln und Schneiden des Pflanzenmaterials trägt, sowie entsprechende Schutzmittel (12), insbesondere in Form einer jeweiligen Haube, die eine Arbeitskammer für die Schneidmittel selbst definiert; wobei die Vorrichtung (11) umfasst ferner Mittel zum Betätigen der Schneidmittel, einschließlich entsprechender Übersetzungsmittel oder eines Getriebes (14), die insbesondere auf den Schutzmitteln oder der Haube (12) aufliegen; wobei die Vorrichtung umfasst ferner eine Einrichtung (10) zur Steuerung des Betriebs der landwirtschaftlichen Vorrichtung (11), einschließlich Mitteln zur Erfassung eines oder mehrerer messbarer physikalischer Parameter oder Größen der Vorrichtung, insbesondere des Betriebszustands der Vorrichtung, sowie Verarbeitungsmitteln, insbesondere Prozessoren, die so konfiguriert sind, dass sie aus dem von den Erfassungsmitteln empfangenen Signal eine entsprechende Aktion ausführen, **dadurch gekennzeichnet, dass** die Erfassungsmittel umfassen Mittel (22), die eine entsprechende Temperatur des im Inneren der Übersetzungsmittel oder Getriebe vorhandenen Schmieröls erfassen können.

2. Vorrichtung nach Anspruch 1, **dadurch gekennzeichnet, dass** die Erfassungsmittel Mittel (20) umfassen, die geeignet sind, mindestens einen Parameter oder eine Größe zu erfassen, der/die den Vibrationszustand der Vorrichtung repräsentiert und insbesondere durch die Drehbewegung der Schneidmittel verursacht wird, wobei die Mittel (20) sind insbesondere in der Lage, einen Parameter oder eine Größe zu erfassen, der/die den Vibrationszustand der Vorrichtung repräsentiert, und umfassen einen oder mehrere, vorzugsweise mehrere, Beschleunigungssensoren.

3. Vorrichtung nach einem der vorhergehenden Ansprüche, **dadurch gekennzeichnet, dass** die Verarbeitungsmittel so konfiguriert sind, dass sie eine Abtastungsaktivität (23) des erfassten Parameters, insbesondere des Parameters, der den Vibrationszustand der Vorrichtung repräsentiert, durchführen.

4. Vorrichtung nach Anspruch 3, **dadurch gekennzeichnet, dass** die Verarbeitungsmittel so konfiguriert sind, dass sie insbesondere anhand der Abtastung des Parameters, der den Vibrationszustand der Vorrichtung repräsentiert, eine Aktivität (231) zur Bestimmung des Vorhandenseins eines entsprechenden Vibrationsmaximums der Vorrichtung durchführen und insbesondere anhand der Abtastung des Parameters, der den Vibrationszustand der Vorrichtung repräsentiert, eine Aktivität (231) zur Klassifizierung der Vibrationsmaxima der Vorrichtung durchführen.

5. Vorrichtung nach Anspruch 4, **dadurch gekennzeichnet, dass** die Verarbeitungsmittel so konfiguriert sind, dass sie insbesondere anhand der Bestimmung (231) von Vibrationsmaxima und/oder der Klassifizierung (232) dieser Vibrationsmaxima und/oder der Berechnung (233) des Mittelwerts des Signals des Parameters, der den Vibrationszustand der Vorrichtung repräsentiert, eine Aktivität (235) zur Bestimmung des Vorhandenseins eines Aufpralls der Vorrichtung, d. h. des Rotors oder seiner Messer, insbesondere gegen einen entsprechenden Körper, d. h. gegen ein Hindernis, durchführen.

6. Vorrichtung nach Anspruch 2, **dadurch gekennzeichnet, dass** die Bearbeitungsmittel so konfiguriert sind, dass sie eine Aktivität (25) der Berechnung der Drehzahl des Schneidmittels bzw. des jeweiligen Rotors, insbesondere anhand des jeweils erfassten Parameters, der den Vibrationszustand der Vorrichtung repräsentiert, durchführen, und insbesondere dass die Bearbeitungsmittel so konfiguriert sind, dass sie eine Aktivität (26) der Steuerung der Drehzahl des Schneidmittels bzw. des jeweiligen Rotors, insbesondere anhand der nach der Erfassung des jeweiligen Parameters, der den Vibrationszustand der Vorrichtung repräsentiert, berechneten Geschwindigkeit, durchführen.

7. Vorrichtung nach einem der vorhergehenden Ansprüche 3 bis 6, **dadurch gekennzeichnet, dass** die von den Verarbeitungsmitteln ausgeführte Aktivität eine Informationstätigkeit für einen entsprechenden Benutzer darstellt, und insbesondere dadurch, dass die Verarbeitungsmittel so konfiguriert sind, dass sie entsprechend der Klassifizierung des Betriebszustands der Vorrichtung eine Informationstätigkeit für den Benutzer ausführen, welche einen Zustand (234a) des normalen Betriebs der Vorrichtung und einen Zustand (234c) des Risikos für den Betrieb der Vorrichtung sowie einen möglichen Zwischenzustand (234b) der Überwachung des Betriebs derselben Vorrichtung definiert.

8. Vorrichtung nach einem der vorhergehenden Ansprüche, **dadurch gekennzeichnet, dass** dieselbe Vorrichtung (10) Mittel zur Positionsbestimmung der Vorrichtung, d. h. der Vorrichtung, an der sie angebracht ist, insbesondere in Form eines GPS-Ortungsgeräts (29), umfasst.

9. Vorrichtung nach einem der vorhergehenden Ansprüche, **dadurch gekennzeichnet, dass** die Verarbeitungsmittel so konfiguriert sind, dass sie insbesondere im Falle des Überschreitens eines vorbestimmten Schwellenwerts eines jeweiligen Parameters oder einer bestimmten Größe Datum, Uhrzeit und Dauer des Überschreitens des Schwellenwerts und gegebenenfalls (in 290) den geografischen Standort der Vorrichtung oder der Einrichtung zum Zeitpunkt des Überschreitens des vorbestimmten Schwellenwerts speichern.

10. Vorrichtung nach einem der vorhergehenden Ansprüche, **dadurch gekennzeichnet, dass** die Vorrichtung (10) Mittel zur Kommunikation, insbesondere drahtlos, vorzugsweise mittels Bluetooth-Technologie, mit einer entsprechenden digitalen elektronischen Einrichtung, beispielsweise einem Mobiltelefon oder Smartphone, d. h. einem Computer, insbesondere einem Handheld-Computer, des jeweiligen Benutzers, und insbesondere mit einer digitalen elektronischen Einrichtung mit entsprechendem Bildschirm aufweist, und insbesondere dadurch, dass die Kommunikation, insbesondere drahtlos, vorzugsweise mittels Bluetooth-Technologie, mit einer entsprechenden digitalen elektronischen Einrichtung während der Erfassungsphase durch dieselben Verarbeitungsmittel, insbesondere denselben Prozessortyp, erfolgt, insbesondere um den Bildschirm der digitalen elektronischen Vorrichtung als Anzeige zu nutzen.

11. Vorrichtung nach einem der vorhergehenden Ansprüche, **dadurch gekennzeichnet, dass** dieselbe Einrichtung (10) mit einer anderen Vorrichtung, insbesondere mit deren Abdeckung oder Haube (12), verbunden werden kann, die vorzugsweise darüber angebracht ist.

12. Vorrichtung nach einem der vorhergehenden Ansprüche, **dadurch gekennzeichnet, dass** dieselbe Einrichtung (10) im Gebrauch in der Nähe, vorzugsweise neben, den Übersetzungsmitteln oder dem Getriebe (14) der Vorrichtung (11) positioniert oder an dieser anordnet ist.

13. Vorrichtung nach einem der vorhergehenden Ansprüche, **dadurch gekennzeichnet, dass** Mittel zur Befestigung der Einrichtung (10) an der Vorrichtung (11) vorgesehen sind, insbesondere in Form von entweder permanenten oder schaltbaren Magneten.

14. Vorrichtung nach einem der vorhergehenden Ansprüche, **dadurch gekennzeichnet, dass** die Einrichtung (10) Mittel zur Bestimmung der Neigung (A) der Vorrichtung, insbesondere in Bezug auf die Horizontale, aufweist oder umfasst, und dass diese Mittel zur Bestimmung der Neigung (A) der Vorrichtung entsprechende Mittel (20) zur Erfassung der Winkelposition der Vorrichtung umfassen und dass diese Mittel zur Erfassung der Winkelposition der Vorrichtung einen oder mehrere Beschleunigungssensoren (20) umfassen oder aus diesen bestehen, insbesondere als ein oder mehrere definierte Beschleunigungssensoren (20) aufweisen, die zur Erfassung mindestens eines Parameters oder einer Größe geeignet sind, die repräsentativ für den Vibrationszustand der Vorrichtung ist.

## Revendications

1. Equipement agricole (11) pour couper des matériaux de plantes, tels que l'herbe, les arbustes, etc., notamment sous forme d'un broyeur, et de préférence pouvant être tractés et/ou transportés par un moyen de transport ou de remorquage correspondant, tel qu'un tracteur agricole (13) ; l'équipement (11) comprenant des moyens (15) de coupe des matériaux de plantes, incluant un rotor supportant des organes ou couteaux respectifs pour accoupler et couper le matériau de plantes, et des moyens de protection (12) respectifs, notamment sous forme d'un capot respectif, définissant une chambre de travail pour les moyens de coupe eux-mêmes ; l'équipement (11) comprenant en outre des moyens d'actionnement desdits moyens de coupe, incluant des moyens de multiplication ou une boîte de vitesses (14) respectifs, et supportés notamment sur lesdits moyens de protection ou capot (12) ; l'appareil comprenant en outre un dispositif (10) pour contrôler le fonctionnement de l'équipement agricole (11) comprenant des moyens de détection d'un ou plusieurs paramètres ou grandeurs physiques mesurables de l'équipement, notamment de l'équipement en condition de travail ou de fonctionnement. et avec des moyens de traitement, notamment du type processeur, qui sont configurés de manière à mettre en œuvre une activité correspondante à partir du signal respectif reçu par lesdits moyens de détection, **caractérisé en ce que** lesdits moyens de détection comprennent des moyens (22) capables de détecter au moins une température correspondante de l'huile de lubrification qui est présent à l'intérieur desdits moyens de multiplication ou boîte de vitesses.

2. Equipement selon la revendication 1, **caractérise en ce que** lesdits moyens de détection comprennent des moyens (20) capables de détecter au moins un paramètre, ou une quantité, représentatifs de l'état de vibration de l'équipement, qui est notamment causé par le mouvement de rotation desdits moyens de coupe, lesdits moyens (20) étant notamment aptes à la détection d'un paramètre ou d'une quantité représentatifs de l'état de vibration de l'équipement comprennent un ou plusieurs, de préférence une pluralité de capteurs d'accélération.

3. Dispositif selon l'une quelconque des revendications précédentes, **caractérisé en ce que** lesdits moyens de traitement sont configurés pour mettre en œuvre une activité d'échantillonnage (23) du paramètre détecté, notamment du paramètre représentatif de l'état de vibration de l'équipement.

4. Equipement selon la revendication 3, **caractérisé en ce que** lesdits moyens de traitement sont configurés pour mettre en œuvre, notamment à partir dudit échantillonnage du paramètre représentatif de l'état de vibration de l'équipement, une activité (231) pour déterminer la présence d'un pic de vibration respectif de l'équipement, et notamment que lesdits moyens de traitement sont configurés pour mettre en œuvre, notamment à partir dudit échantillonnage du paramètre représentatif de l'état de vibration de l'équipement, une activité (231) de classification des pics de vibration de l'équipement.

5. Equipement selon la revendication 4, **caractérisé en ce que** lesdits moyens de traitement sont configurés pour mettre en œuvre, notamment à partir de ladite détermination (231) des pics de vibration et/ou à partir de ladite classification (232) desdits pics de vibration et/ou à partir dudit calcul (233) de la valeur moyenne du signal dudit paramètre représentatif de l'état de vibration de l'équipement, une activité (234) de détermination de la présence d'un impact de l'équipement, c'est-à-dire du rotor ou de ses couteaux, notamment contre un corps correspondant, c'est-à-dire contre un obstacle.

6. Equipement selon la revendication 2, **caractérisé en ce que** lesdits moyens de traitement sont configurés pour mettre en œuvre une activité (25) de calcul de la vitesse de rotation des moyens de coupe ou du rotor respectif, notamment à partir du paramètre détecté respectif représentatif de l'état de vibration de l'équipement, et notamment que lesdits moyens de traitement sont configurés pour mettre en œuvre une activité de contrôle (26) de la vitesse de rotation des moyens de coupe ou du rotor respectifs, notamment à partir de la vitesse calculée suite à la détection du paramètre respectif représentatif de l'état de vibration de l'équipement.

7. Equipement selon l'une quelconque des revendications précédentes 3 à 6, **caractérisé en ce que** ladite activité mise en œuvre par lesdits moyens de traitement consiste en une activité de type d'information pour un utilisateur correspondant, et notamment **en ce que** lesdits moyens de traitement sont configurés pour mettre en œuvre, suite à la classification de l'état de fonctionnement de l'équipement, une activité d'information pour l'utilisateur définissant une condition (234a) de fonctionnement normal de l'équipement et une condition (234c) de risque pour le fonctionnement de l'équipement, ainsi qu'une éventuelle condition intermédiaire (234b) d'attention pour le fonctionnement du même équipement.

8. Equipement selon l'une quelconque des revendications précédentes, **caractérisé en ce que** le même dispositif (10) comprend des moyens pour localiser la position du dispositif, c'est à dire de l'équipement auquel il est appliqué, notamment sous la forme d'un localisateur GPS (29).

9. Equipement selon l'une quelconque des revendications précédentes, **caractérisé en ce que** lesdits moyens de traitement sont configurés pour stocker, notamment en cas de dépassement d'un seuil prédéterminé d'un paramètre ou d'une quantité respective, la date, l'heure et la durée du dépassement du seuil, et éventuellement (en 290) la position géographique du dispositif ou de l'équipement lors du dépassement dudit seuil prédéterminé.

10. Equipement selon l'une quelconque des revendications précédentes, **caractérisé en ce que** le même dispositif (10) comprend des moyens de communication, notamment en mode sans fil, de préférence avec la technologie Bluetooth, avec un dispositif électronique numérique correspondant, par exemple un téléphone mobile ou un smartphone, c'est-à-dire un ordinateur, notamment un ordinateur de poche, de l'utilisateur respectif, et notamment avec un dispositif électronique numérique doté d'un écran d'affichage respectif, et notamment **en ce que** la communication, notamment en un mode sans fil, de préférence avec la technologie Bluetooth, avec un dispositif électronique numérique correspondant a lieu pendant la phase d'acquisition par les mêmes moyens de traitement, notamment du type de processeur, notamment de manière à utiliser l'écran dudit dispositif électronique numérique comme écran.

11. Equipement selon l'une quelconque des revendications précédentes, **caractérisé en ce que** le même dispositif (10) peut être associé à un équipement, notamment aux moyens de couverture ou capot (12) de celui-ci, étant de préférence placé au-dessus de celui-ci.

12. Equipement selon l'une quelconque des revendications précédentes, **caractérisé en ce que** le même dispositif (10) est positionnable ou positionné, en utilisation, à proximité, de préférence à côté, du moyen de multiplication ou boîte de vitesses (14) de l'équipement (11).

13. Equipement selon l'une quelconque des revendications précédentes, **caractérisé en ce que** des moyens sont prévus pour fixer le dispositif (10) à l'équipement (11), notamment sous la forme de moyens magnétiques, de type permanent ou de type pouvant être activé et désactivé.

14. Equipement selon l'une quelconque des revendications précédentes, **caractérisé en ce que** le dispositif (10) met en œuvre ou comprend des moyens de détermination de l'inclination (A) de l'équipement, notamment par rapport a l'horizontale, et en c que lesdits moyens de détermination de l'inclination (A) de l'équipement comprennent des moyens (20) correspondantes de détection de la position angulaire de l'équipement et que lesdits moyens de détection de la position angulaire de l'équipement comprennent ou sont formés d'un ou plusieurs capteurs d'accélération (20) et notamment définis comme l'un ou plusieurs capteurs d'accélération (20) qui sont adaptés pour la détection d'au moins un paramètre ou quantité, représentatif de l'état de vibration de l'équipement.
